# EUROPEAN PATENT APPLICATION

(11) **EP 2 819 418 A1**
(43) Date of publication of application: **31.12.2014**
(21) Application number: 13250081.0
(22) Date of filing: 27.06.2013
(51) Int. Cl.: H04N 21/2343, H04N 21/258, H04N 21/61, H04N 21/845, H04N 21/8549, H04N 21/235, H04N 21/25, H04N 21/84, H04N 21/475

(54) **Provision of video data**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

Video data is retrieved by a user device 41 from a database 49 as a plurality of video segments each having metadata 44 associated therewith indicative of the relative narrative interest of individual segments of the data, and is arranged such that it may be played at a selectable plurality of speeds.

The speed at which each segment is to be played is selected in accordance with the metadata associated with that segment. This allows a "catch-up" facility to be provided to allow a viewer to watch the beginning of a sequence which is still being created (e.g a sports fixture in progress) at a variable speed so that the events of greater interest are displayed at normal speed (or in slow motion) and the less significant parts at a faster speed.

The selection of the parts to be played at each speed can be tailored to the interests of the user, the relative interest of each segment, and the elapsed duration of the sequence to be viewed.

The speed may be controlled by selective omission of frames, or groups of frames. Alternatively, separate streams may be generated for the different speeds available, and a manifest file generated specifying from which stream each segment is to be selected.

Processing of the video stream to generate the various speed outputs may be in a client device 41 or in a client agent embodied in a content server device 420. The process may be controlled by the client device or by an agent in a request server 42.

## Description

This invention relates to the provision of video data over a communications medium. In particular it relates to the playback of recorded video data over a data network such as the "Internet".

One technique for delivering video data over a network is to split the data into equal-sized "chunks". Each chunk can be uniquely identified by a URI (Uniform Resource Identifier) and a client wishing to receive such a video sequence will initially download a manifest file that describes the sequence of URIs that it needs to request in order to play the video stream.

Viewers watching a programme, particularly of a sporting event, often wish to see only the "highlights" rather than its full duration. Traditionally, highlights programmes have been manually edited and compiled by the broadcaster, often with added commentary or analysis. Such an arrangement is prescriptive, and can be labour-intensive and time-consuming to produce.

It is desirable to provide a "catch-up" facility to enable a viewer starting to view a match already in progress to watch the highlights of that part of the match that has already taken place before watching the remainder of the match "live" (in real time). The relative importance of events in the match, and therefore whether they merit space in a catch up sequence, will change dynamically as the match progresses, so a catch-up sequence to cover the first twenty minutes of a game may include very little of the content of a sequence of the same length covering the first ten minutes. The desired duration of the "catch-up" sequence may also vary: for example a longer catch-up sequence may be appropriate if the viewer joins during an interlude when no live action is taking place, such as a half-time break.

Most video playback devices have a facility known as "accelerated play" "fast forward" or "trick play" which allows a viewer of stored or recorded content to move at faster (or slower) than the real-time speed of the programme, in order to step rapidly forward or back to different parts of the sequence, or to interrupt (pause) the sequence. In many systems some content continues to be visible during fast modes, which aids identification of the content required. A viewer can use this to "fast forward" through a recording of the programme, reverting to normal speed to watch sections that catch his interest. However, it can be difficult to identify the sections that are interesting. In particular, the user may have to backtrack, having overshot. This can be time-consuming.

Various ways have been devised to generate "bookmark" data to identify the locations of highlights within a longer video sequence. It is known, for example from International Patent Specification WO2004/025508 to provide an automated procedure to identify 'highlights' within a video sequence in order to provide the viewer with navigation aids or to simplify and reduce costs in video production and editing. The prior art typically identifies video clips automatically through analysis of changes in video or audio levels within a video sequence. More specifically, the boundaries of the 'highlight' video segment are typically identified using various super-histograms, frame signatures, cut detection methods, closed caption information, audio information, and so on, by analysing the visual, audio and transcript portions of the video signal. For example, based on the volume of audience cheers (US7831112) recorded in response to the performance of the athletes, or analysis of the area of the image depicting the score to detect changes (US7983442). It is also known, for example from European Patent Application EP0142178, to provide for a viewer to manually bookmark a 'highlight' for later access. The bookmarks can be augmented with metadata identifying the nature of the event (score, dismissal, accident etc.), the individual competitors involved, etc., to allow a user, or an automated system programmed with a user's preferences, to compile a sequence tailored to the user's interests.

As described in our European patent application EP 13250024.0, each chunk of video data (which typically may represent 2 seconds of content) is given a Narrative Interest Value (NIV), to indicate the likely interest to the viewer of the content. This value can be used by the download apparatus to select which chunks to display, thereby allowing a highlights programme to be generated according to the individual viewer's requirements.

The NIV is derived from an event in the video sequence that is deemed to be of significant interest e.g. a goal in a football match. The actual event is recorded by an Event Marker which identifies the chunk of video in which the event occurs. This chunk of data is given a NIV of 1. Successive chunks of data either side of the Event Marker (EM) have decreasing narrative interest and are marked appropriately 2, 3, 4 etc. A chunk with a NIV of 1. has the most interest, and interest decreases as the numerical value of the NIV increases.

As described in our European application 13250026.5, metadata may be used to skew the duration of a video clip to be asymmetric with respect to the bookmark. Different events in a video stream will have different distributions of narrative interest in relation to the Event Marker. For example, for a goal in football the most interesting content for the viewer will be that which precedes the event, whereas for the award of a penalty or free kick it is what happens after the event that is more interesting. To take this into account, a Pre/Post Event Ratio (PPER) is defined that skews the distribution of NIV values around the event marker. For example a PPER of 1:1 indicates that chunks either side of the event marker carry equal significance, whereas a PPER of 3:1 is appropriate if the content before the event marker is more interesting than that following the event marker.

A video sequence may contain a number of event markers. Each chunk in the video sequence may consequently have several NIV values, each attributed to a particular event marker. A Combined NIV (CNIV) can be calculated for each chunk by considering all the individual NIVs associated with that chunk. In the preferred method the CNIV for each chunk is defined to be the minimum NIV value associated with that chunk.

The invention provides a method for playing video data retrieved from a database as a plurality of video segments each having metadata associated therewith indicative of the relative narrative interest of individual segments of the data, wherein the video data is capable of being played at a selectable plurality of speeds, and wherein the speed at which each segment is played is selected in accordance with the metadata associated with that segment.

In the preferred arrangement, the speed of each segment is controlled in accordance with a Narrative Interest Value for each segment, derived from the proximity of the segment to an event marker.

The Event Markers may be created/determined in a number of ways. For use in a catch-up facility they would need to be created as the events take place, in near-real time. In one approach, the Event Markers may be created by a studio/production house as part of the editing of the video stream. Another approach is through the aggregation of "bookmarks" supplied by other viewers (Figure 2) as described in our earlier European patent application EP13250026.5.

The invention also provides a video playback device having a store for storing video content and associated metadata, a playback element for playing the stored video content, a "trick play" system for controlling the playback element to allow the stored video content to be played at a selectable plurality of speeds, and wherein the accelerated play system is controllable in response to the metadata associated with the video content.

A catch-up sequence, or other video highlights sequence can therefore be compiled by governing the video sequence playback speed according to the associated metadata. The metadata can be compiled according to the likely interest of the associated content to particular users, so that on playback the content of most interest to the user requesting it would be played at normal speed (or even in slow motion) while less interesting content would be played back faster. This provides potentially visually appealing content to the user.

In a "catch-up" facility, provided to allow a viewer who has missed the start of a game to view most of the remainder in "real time", but desires to first see highlights of the part he has missed, requires the sequence to be generated almost in real time. Satisfying this requirement requires compiling a sequence "on the fly" tailored to the content that has already passed, and may need modification even as the sequence is viewed, should a further significant event take place whilst the catch up sequence is being viewed, either by extending the duration of the catch up sequence, or omitting part of it to accommodate the extra event.

The playback device may be embodied in a consumer product such as a "set top box" associated with the user's viewing apparatus. In accordance with this aspect, it may provide a video playback device incorporated in a client device and having a receiving system for receiving video data and associated metadata, a processor for adapting a playback speed of the video data in accordance with the associated metadata, and a video playback system for playing the video data at the adapted speed.

However, in the preferred arrangement, the invention may be embodied in a server device for control, through a data connection such as an Internet connection, by an end user ("client") device associated with the user's viewing apparatus. In this aspect a video playback device is incorporated in a server platform, having an addressable storage facility for storing a plurality of sets of video data arranged to be played at different respective speeds, and a store for address data associated with the video data, and a store for metadata associated with the video data, a manifest compiling system for compiling a set of addresses of video data selected from the stored sets of video data in accordance with the metadata associated with the video data

In the preferred arrangements, only the video content that is actually to be played is transmitted over the data connection between the data provider and the user. This reduces the amount of data required to be downloaded, masking it suitable for devices on mobile networks and other low bandwidth networks, and reducing the download time, so avoiding buffering problems that could be caused if the playback speed were to exceed the speed the network is capable of supporting. This may be achieved either by performing the selection process at the head end (service provider) or by having the client device performing the selection process and compiling a manifest request specifying each part of the content in the required final format (resolution, quality and associated bit rate). Several mechanisms can be used to achieve this, and will be described briefly here and in more detail later.

In a first arrangement, the live video stream may be encoded at a defined bit rate for subsequent retransmission at a number of predefined playback speeds; using an Adaptive Bit Rate technology (ABR). An MPD (Media Presentation Description) file would then be created which defines from which stream each section of the video should be selected for presentation to the viewer.

Use of the MPD file (similar to previously described manifest file) would enable personalised streams to be created. It would also enable different lengths of content to be created suited to the required catch-up time required.

In a second arrangement, a video file is created which unifies the variable speed videos into a 'single' stream. This stream could also be encoded with ABR, enabling delivery suited to available bandwidth.

In a third arrangement, the video is encoded at normal (x1) speed using ABR, and when a catch-up is required the video is streamed faster than real-time for playback on the client device, which would control the playback speed of the video. To provide some level of bandwidth saving to be performed, ABR could be used to reduce the bitrate per frame, for video sections that are to be played back at high speed e.g. x16, for example by only transmitting "I-frames" or reducing error checking.

A fourth embodiment uses the MPD file to define byte ranges within video segments which would be requested by the client and downloaded for playback.

In the preferred embodiment the metadata comprises a "narrative interest value" (NIV) assigned to each segment. The NIV for each segment can be generated by the content provider or by the playback device itself, and can be derived from the chronological distance (number of segments) between one or more bookmarks or "event markers" and the segment in question. In the embodiment described, an NIV derived from one or more bookmarks is referred to as a "combined NIV" (CNIV).

In an embodiment, smoothing may be applied to the NIV values, or to the resulting playback speeds, to prevent frequent changes in playback rates.

The range of NIVs appropriate to each playback speed may be selected such that the overall duration of the sequence, or the time that it is completed, meets a predetermined condition.

In one embodiment, event markers applied by multiple viewers are aggregated. A threshold can be applied to limit the number of aggregated event markers by only considering regions of the video sequence where there have been more than a minimum number of user-supplied event markers for a given event type within a given timeframe.

In use, the viewer can therefore download and play back content in a special mode in which each "chunk" of content is played back at a rate which is related to the CNIV associated with that chunk.

The playback system may ascribe different weightings of NIV values to different events, for example to take into account a viewer's preferences - for example to pay more attention to one team's scoring successes than those of their opponents. This can be done by ascribing an NIV other than "1" to an event of minor significance, according to the associated metadata, or by adjusting the rate at which NIVs vary with proximity to their associated event marker.

An embodiment of the invention will now be described, by way of example, and with reference to the drawings, in which:
Figure 1 depicts a media server, a content server, and an associated client device arranged to operate according to the invention to control a catch up sequence of a video transmission
Figure 2 is a flow diagram illustrating the processes performed in the creation of bookmark timestamp data.
Figure 3 is a diagram illustrating the capture of bookmark data.
Figure 4 is a further diagram illustrating the capture of bookmark data
Figure 5 illustrates a first method of operation of the invention
Figure 6A illustrates a second method of operation of the invention
Figure 6B illustrates a third method of operation of the invention
Figure 7 illustrates a fourth method of operation of the invention

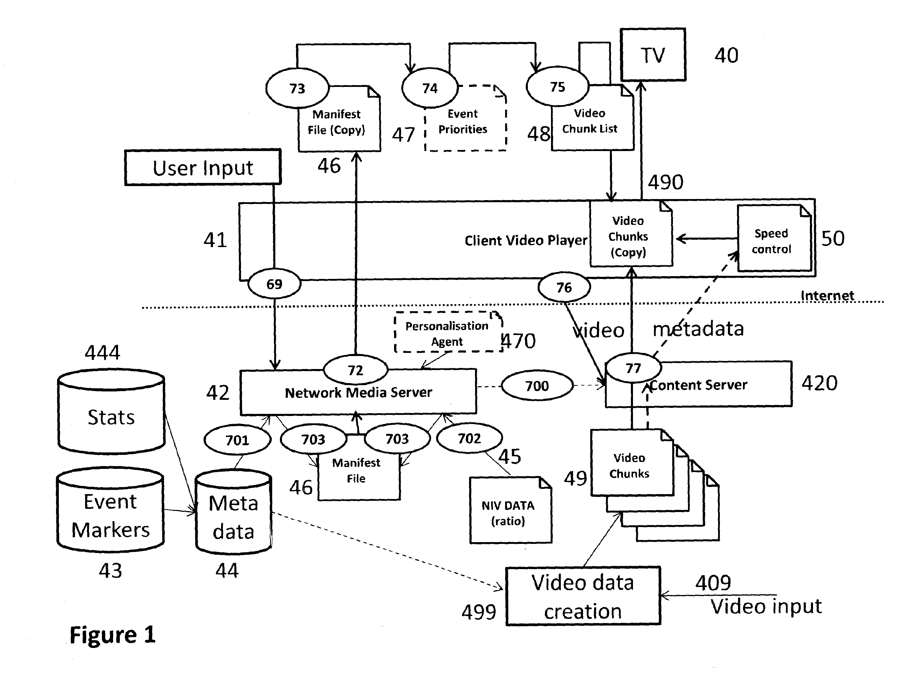

A number of mechanisms can be used to enable the creation of 'bookmarks' for events in sports TV programmes, and to enable service providers to utilise these bookmarks in the identification, delivery and provision of video programmes. One such system, fully described in our co-pending applications EP 13250024.0 and EP13250026.5, will be summarised here and illustrated in Figures 1, 2, 3 and 4. It will be appreciated that the present invention does not depend on the way the event ,markers were created, but this description is included for completeness.

Figure 1 illustrates a video playback device 41 for use by a viewer to download video data from a server 420 and play the data on an output device 40 such as a conventional television set.

Users can identify key events (such as goals) within a video sequence, either during live transmission or whilst watching a recording, and mark them using 'temporal bookmarks'. These 'temporal bookmarks' can then be used by that viewer to navigate easily back to those events in the video sequence. They may also be transmitted to a database 43 to allow their use by other viewers to identify the parts of the video content which are considered, by the viewers, to be of particular interest. Bookmarked events are stored as time-codes along with associated metadata. 44 provided by the viewers to classify the events. The metadata enable individual bookmarked sections to be classified so as to allow individual sections to be prioritised for viewing depending on the interests of the viewer.

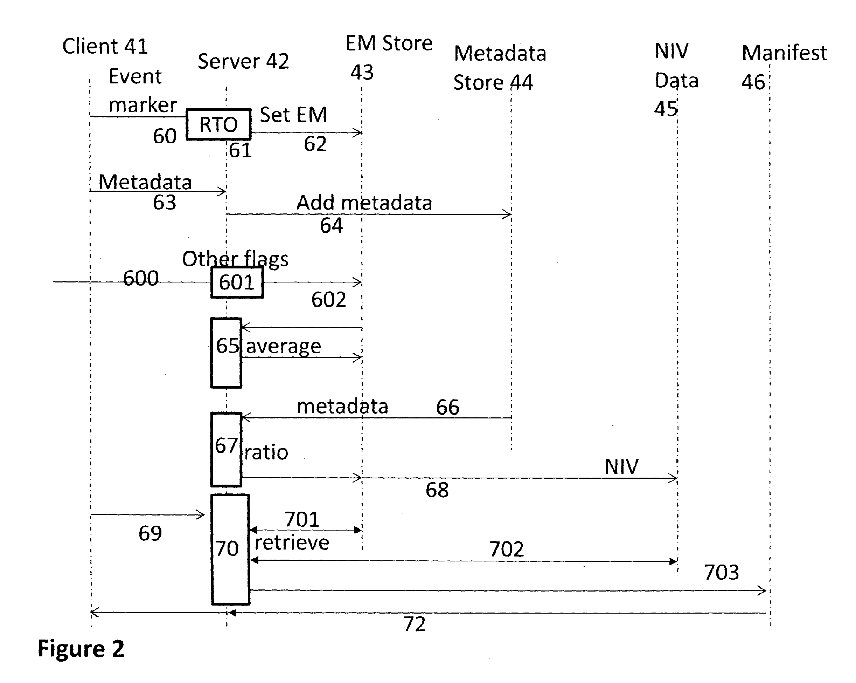

As shown in Figures 1 and 2, the viewer uses a video device 40 such as a television set to view broadcast or recorded video content such as coverage of a sports event. For ease of use the viewer may also be using a tablet device 41 or other terminal onto which has been loaded a software application ("App"). A number of such applications are available which can synchronise such a terminal to the output of a video device 40 linked to a server 42 so that the server can monitor the content being watched by the viewer. The server 42 also has data related to the content being watched. For example for a football match, it would have data on the identities of the teams and individual players. The App provides a user interface that enables the viewer to bookmark the video stream and add metadata to that bookmark.

The application loaded on the tablet device 41 allows a user to bookmark events in the television content and add metadata relating to that event, to be stored on the server 42. This process, illustrated in Figure 2, enables the user to locate the event in order to share a video clip of it with other users using a social network, or to review the clip again after the event, or participate in a vote or competition which requires the nomination and submission of a clip.

As shown in Figure 2, the viewer 'bookmarks' the event by first selecting an action (goal, free kick, etc.). This creates an "event marker" The event marker is then saved to the server together with metadata items, for example identifying the sportsperson involved). This bookmarking process is identified collectively as step 60 in Figure 2. Each event is identified using a single point in time within a video sequence, referred to herein as an Event Marker (EM). The EM would typically identify the exact moment of the event of interest, for example when a ball crosses the goal mouth, or the moment a bad tackle was committed. Each EM is specified by a time-code, frame or video chunk identifier within a video sequence.

The viewer may also provide additional metadata associated with the bookmark (step 63). This would include further information such as the type of event - (goal, pass, shot on goal, save, corner kick, red card, etc.), the main primary person associated with the event - (Footballer, Referee, Manager, linesman, etc.), and comments or descriptions the viewer may wish to add to the event to support later retrieval or to add context to the video clip.

The event markers and additional metadata are recorded in associated XML files 43, 44, (steps 62, 64) typically stored in association with the server device 42 so as to be accessible to both the viewer's Local Area Network and the video service provider.

There may be a mismatch between when the event actually occurred and when the user pressed the 'save bookmark' button. This mismatch can be reduced using either or both of the following methods.

The server 42 can modify the bookmark time-code by using a user-specific Reaction Time Offset value (RTO), (step 61) which attempts to minimise differences between when the event actually occurred and when the viewer indicated it occurred. The RTO for each user can be calculated by using reference video content in which event markers have previously been identified. The average difference between the time-code for a reference event marker and the time code of the equivalent event marker as identified by an individual viewer can be used to calculate that user's RTO. In Figure 1 this process 61 is depicted as being performed by the server platform 42, but it could be done by the client device 41.

The bookmark time-code can be further improved through comparison with bookmarks (600, 601, 602) created by other viewers. By identifying a significant number of bookmarks saved by viewers relating to the same event (as identified by metadata applied by the users, or simply by chronological proximity to each other), and calculating a single representative value from them, a more accurate time code for an event marker can be calculated (step 65). This time-code adjustment process would take place on the server's centralised bookmark store 42 and returned to the event marker store 43.

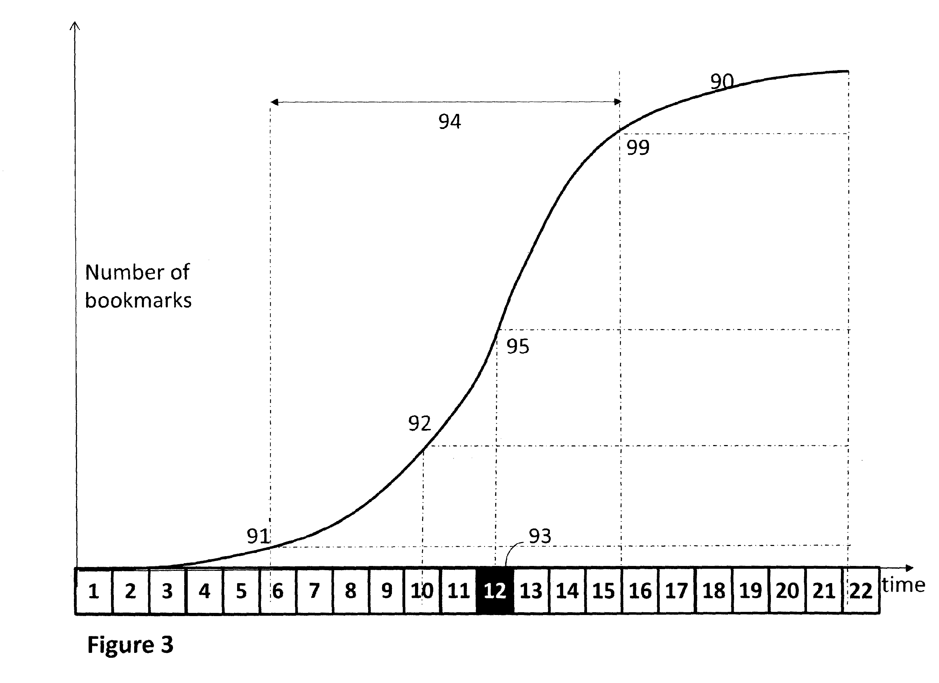

An example of this process can be understood with reference to Figure 3. The curve 90 represents the cumulative total, over time, of bookmarks 60, 600, 601, 602 etc. transmitted by different users in relation to a single event, and identified as relating to the same event by comparison of the metadata 63 associated with them. The horizontal time axis is graduated in terms of individual "chunks" 1, 2, 3, ...22 of video data, typically each of about two seconds in duration, into which the stream is divided.

The details of the shape of the distribution of bookmarks over time will vary somewhat depending on the type of event being flagged. Empirical systems may be used to estimate, using the shape of the distribution 90 and the metadata 64 supplied by the users bookmarking the data, the optimum time to place the event marker 93. For example the event marker can be defined as a predetermined percentile of the bookmark times - for example the first quartile (25^{th} percentile) 92, or the median (50^{th} percentile) 95, depending on the type of event being bookmarked. In the example depicted in Figure 3 the event marker 93 is placed at the median point, which is chunk 12. For some types of event, different criteria may be found to be optimum, for example the steepest point of the cumulative curve, representing the statistical mode of the distribution, may be used

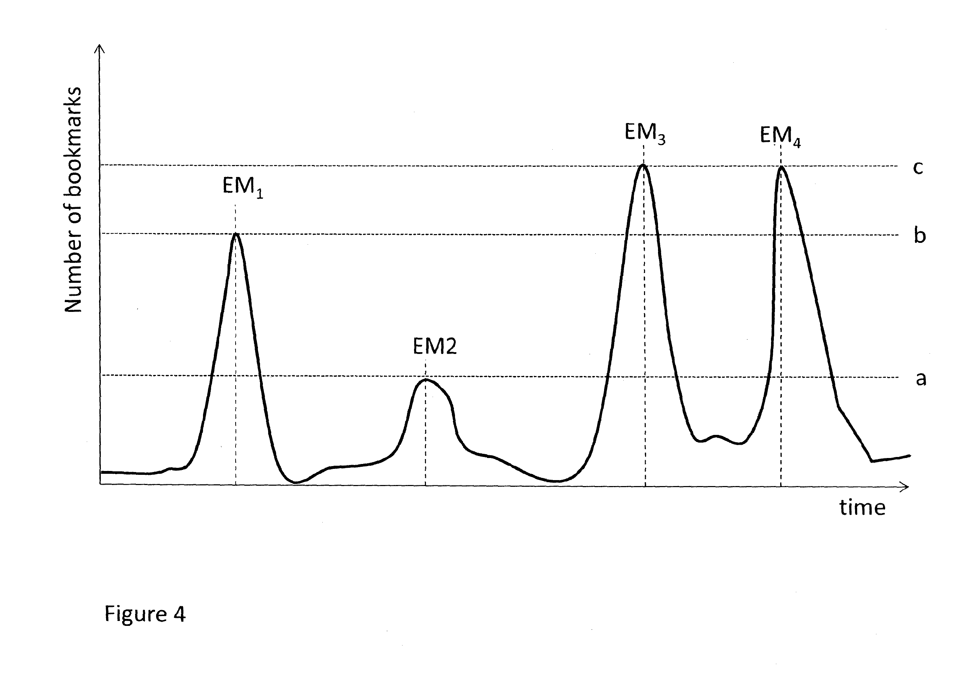

Figure 4 illustrates how event markers may be generated from peaks in the number of bookmark events generated by individual viewers. The location of each peak identifies an event EM1, EM2 etc. A weighting a, b, c may be applied to the NIVs associated with each event marker according to the number of bookmark events associated,with it.

As well as the viewer-participation process depicted in Figure 2, metadata can also be created automatically to simplify the bookmark creation process. As shown in Figure1, for example, using other data sources 444 (for example the real-time data feed provided by OPTA Sports Ltd) it would be possible for the system to provide data on which player had possession of the ball when the 'save bookmark' button was selected by the viewer.

The refined or aggregated bookmarks are added to a bookmark list 43 stored on the media server 42 available to the application stored on individual client devices 41.

Each bookmark (or Event Marker) (e.g "93", Figure 3) only defines a specific moment in time. By dissecting large video files into multiple smaller files (called chunks), each being for example two seconds in length, a video "clip" can be defined by specifying a number of chunks that occur before and after a given Event Marker.

As described in the co-pending applications referenced above, a number of "chunks" preceding and following an event marker are each allocated a respective "narrative interest value" (NIV). The event marker itself is allocated a NIV of 1, and the other chunks are allocated NIVs proportional to their distance from the event marker. The NIVs may increase at different rates before and after the event marker, in proportions determined by a "pre/post event ratio" (PPER) defined by metadata associated with the event marker. So, for example, with a PPER of 1:1, chunks will be allocated NIVs in ascending order at the same rate both before and after the event marker. For a PPER of 2:1 two chunks will be allocated before the EM for each chunk afterwards. Similarly for a PPER of 3:1 - three chunks are downloaded preceding the EM for each one following it.

In the co-pending applications, each chunk in a sequence has a unique NIV. This is done because in those earlier inventions the NIVs determine the order in which the video chunks are to be downloaded. In the present invention, the catch up sequence is to be viewed immediately, so the order of download will typically be the chronological order of the events depicted, and the NIV is used for a different purpose. It is therefore possible for a plurality of chunks associated with a single event marker to all be allocated the same NIV. However, in this embodiment a unique NIV is allocated to each chunk of a given sequence. This allows the same NIV allocation process to be used as for the earlier inventions. The same NIVs can then be used both for download and for playback.

The present invention allows this bookmark data to be used to download a video package at a variable rate, as will now be described. Returning to discussion of Figure 1, this Figure depicts a client device 41 having an output to a television set 40 or other monitor device, and a connection over a communications network to a media server 42 and a content server 420. The media server 42 has a number of associated data stores 43, 44, 45, 46 which store event markers and other metadata associated with the video data, and manifest files for specifying which parts of the video data are to be delivered to individual clients, and in what order. Some manifest files 46 may be pre-prepared so that they can be downloaded on request, but for the catch-up service which is the subject of the present invention the manifest is created dynamically, in response to specific requests 69 from clients, as each manifest needs to cover events recorded over a period which ends at the instant the request is made.

The client server 41 has a store for downloaded manifest files 46, and may also have a store of personalised priorities 47 for modifying the manifest file in order to prepare a request 48 for delivery of video content. In other embodiments personalisation is done using an agent 470 in the media server.

The server content platform 420 has a store of video content 49 from which is retrieved the content 490 specified in the request 48 for delivery to the client device 41.

The steps in the delivery process are as follows:

The client 41 requests a "catch up" manifest file 46 from the server 42 (step 69), This file may constitute several parts, each containing a sequence of "chunks". For example, separate parts may be defined by interruptions or scheduled breaks in play, so that the catch up sequence skips those breaks, rather than running through them at fast forward speed, (Even at 16x speed, the standard fifteen-minute half-time break in Association Football ("Soccer") would take nearly 60 seconds to play)

The manifest file is compiled from the EM and NIV data (step 70 - Figure 2) For a catch-up facility the length of the sequence video is defined by the server, taking into account the number of interesting events that have been flagged so far, the personal profile of the viewer, which may affect which of those events are expected to be of most interest to that particular viewer, and any fixed points in the schedule of the live play, for example the end of a scheduled break (e.g. half-time) at which time it would be desirable to return to the live broadcast. For example, the length of the catch-up video may be set to be a standard duration, but capable of being extended to the end of such a natural break if it would otherwise end during that break.

For reach such request 69 from a client the media server 42 uses the data 44, 45 associated with each event marker (steps 701, 702) to determine a priority list (step 703). This list may be tailored towards the user's preferences - for example in a football game the user may give priority to viewing goals scored for the team he supports rather than those scored for the opposition, and may prioritise goals over other incidents, such as events surrounding a caution or dismissal of a player, and generates a manifest file 46 specifying the segments required and the speed at which each segment is to be presented.

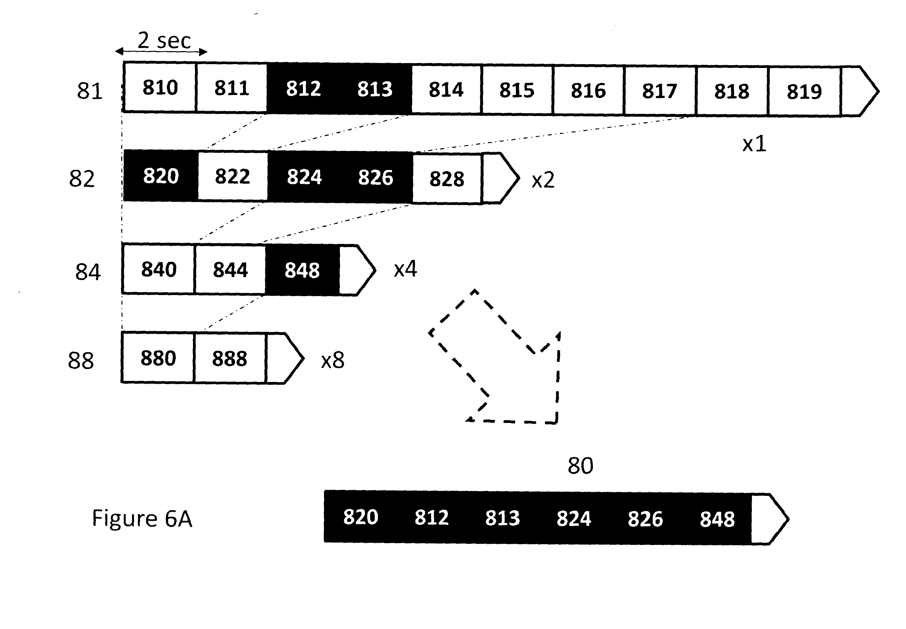

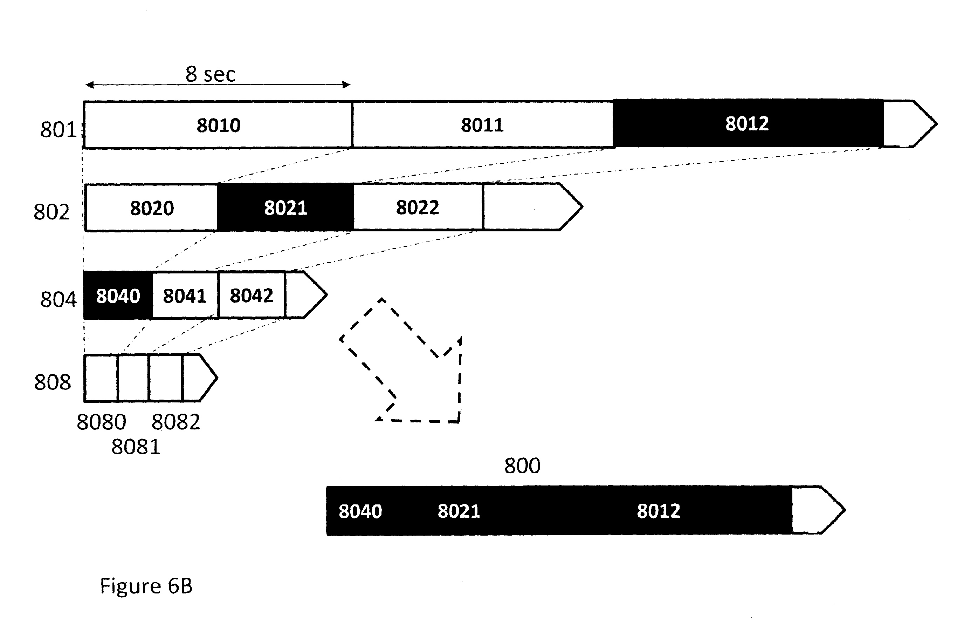

Processes by which the manifest file 46 may be compiled will be described later, with reference to Figures 6A and 6B

The server 42 delivers the manifest files 46 to the client 41 (step 72). The Client 41 reads the manifest file 46 (step 73), and interprets it to generates a video chunk list 48. This is a list of file addresses from which the required video chunks are to be downloaded. The client 41 transmits this chunk list 48 to the content server 420 (step 76).

The media server 42 and content server 420 may in practice be associated in a single platform or, as shown, with the generation of the manifest file 46, and the locations of the video chunks 49 to be called for by that manifest file, located in different parts 42, 420 of a distributed system.

The server 420 retrieves the video chunks 49 and transmits them in the order specified in the request (step 77)

The client 41 receives the video chunks 49 and a copy is made 490 which is processed (buffered, decompressed, etc) for display.

The manifest file could include the NIV data by including a special field into an MPEG DASH (Dynamic Adaptive Streaming using HTTP) MPD file. A DASH client would retrieve and play the video content using these steps:
1. The client downloads and reads the MPD file to get important information, such as the content locations, segment encodings, revolution, minimum and maximum bandwidths; accessibility features like closed captioning and content restrictions (such as DRM).
2. The client selects an appropriate segment encoding and begins streaming the content through a series of HTTP requests. The server creates and encodes each segment on demand for each request, all from the same source.
3. The client buffers data as it's downloaded, while also keeping track of fluctuations in the connection bandwidth. If necessary, the client automatically changes to a different segment encoding (from those listed by the MPD file) that's more compatible with the current bitrate. This ensures the client maintains a sufficient buffer throughout the video without downloading more data than is needed.

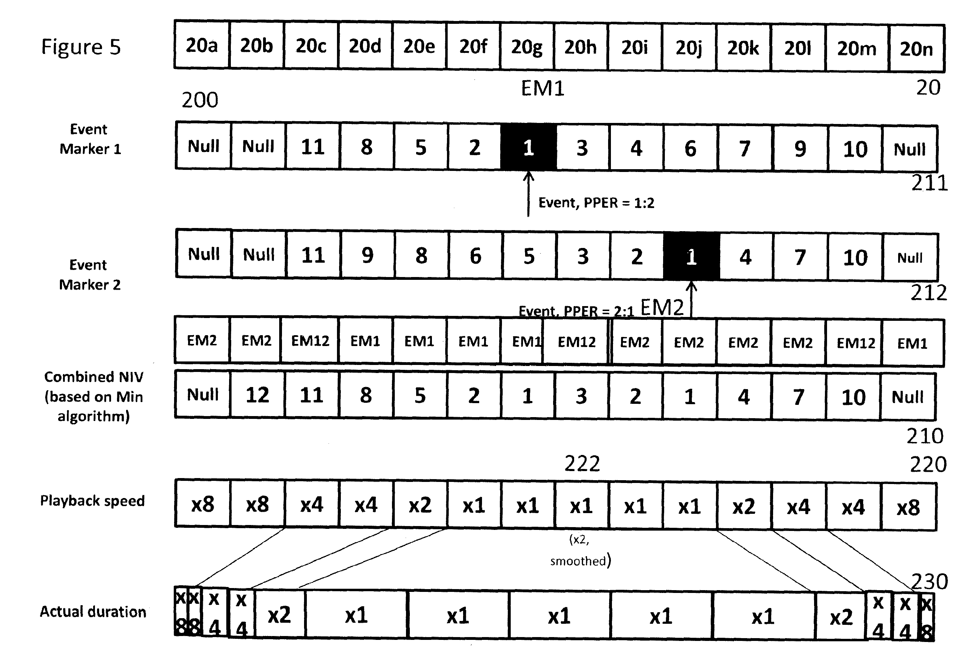

Figure 5 illustrates how the NIV data stored in the server may be used to vary the playback speed. It depicts a sequence 20 of fourteen segments 20a - 20n. Two event markers EM1, EM2 are associated, respectively, with segments 20g, 20j. These have PPERs of 1:2 and 2:1 respectively, resulting in different sequences of NIVs, as indicated at references 211, 212. NIVs are allocated with ascending values for the chunks following the event marker in chronological order, and NIVs are allocated with ascending values for the chunks preceding the event marker, in reverse chronological order, in proportions determined by the respective PPER for that sequence. A combined NIV is generated for each segment by taking the minimum value of the NIVs 211, 212 for that segment. The sequence of combined NIVs is depicted at reference 210, together with the marker (EM1, EM2) from which each NIV is derived. (EM12 where both EM values are the same)

A maximum NIV is set, in this example at 11, and any segment more remote than the segment with maximum NIV is assigned a null NIV, as shown at reference 200.

The CNIV is used to determine the playback speed. In the example shown in Figure 5, playback speed is selected as follows.

| CNIV Range | Playback speed |
|---|---|
| 1,2 | x1 |
| 3,4,5 | x2 |
| 6,7,8,9, 10, 11 | x4 |
| null value | X8 |

This gives playback speeds as shown at 220, and the actual duration of each chunk is illustrated at 230. In this example, the number of NIVs allocated to each speed increase with the speed so that changes of speed occur at approximately equal intervals in real time.

When using CNIVs derived from user-generated bookmarks, it is possible to modify the CNIVs by their corresponding event popularity, by using the relative number of user-generated events that contributed to an event marker as a weighting factor to modify the CNIV

To avoid too many changes of speed, which can be distracting, a smoothing may be applied to the playback speeds. For example, the speed control unit may be arranged so that if a first chunk has a CNIV that is associated with a first speed is both preceded and followed by chunks having CNIVs associated with "normal" speed, all three chunks are played at the normal speed, as is illustrated at 222.

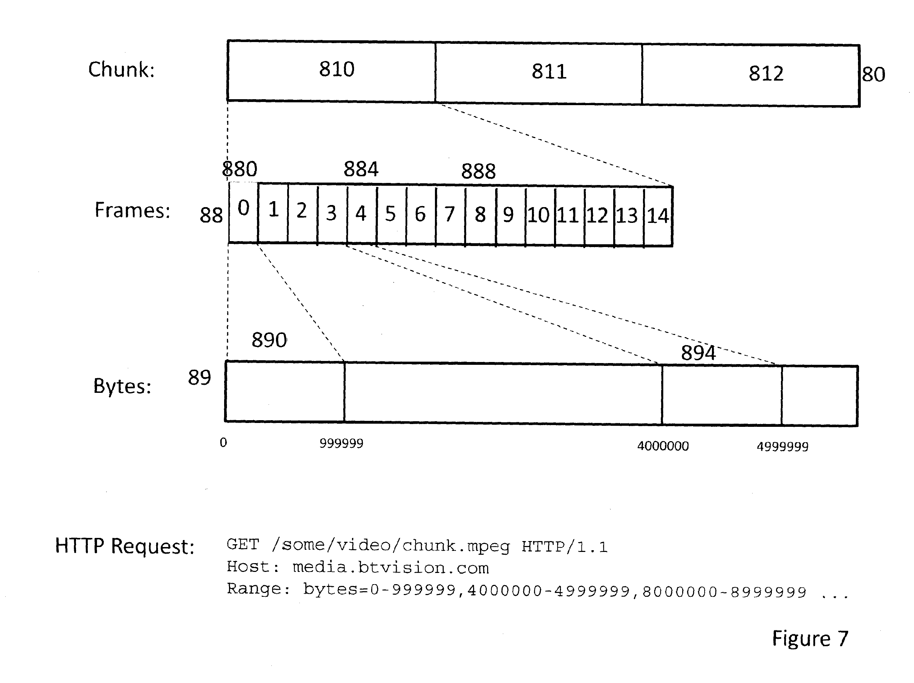

A number of processes will now be described by which a variable-speed catch up sequence may be delivered to the viewer. In these embodiments, the NIV values are stored in the media server 42 as metadata, (for example adding a field into the MPEG DASH (Dynamic Adaptive Streaming Http) file as will be described later, with reference to Figure 7), and used to control playback speed. In some embodiments, the client device 41 includes a speed control system 50 which can be controlled by NIV data associated with the video chunks 49 streamed from the content server 420.

To provide some level of bandwidth saving to be performed. ABR could be used so that low bitrate video chunks would be provided for sections that are to be played back at high speed e.g. x16. Similarly, when playback speed is e.g. X1 then higher bitrates could be selected. It would not in general be possible to preserve the rate of bits/frame - I-frames require more bits than B- and P-frames, so if only B- and P-frames are omitted, leaving a higher proportion of I-frames, the average number of bits/frame will increase. However, the number of bits transmitted per second will be less than if all the frames were to be transmitted at a speed sufficient for the speeded up playback to keep up.

In the preferred embodiment, the variable speeds are encoded by the server 42, and different chunks are generated for storage in the content server 420, with the required speeds already incorporated in the chunks before they are downloaded. This allows the client terminal 41 to operate conventionally, and also reduces the amount of data that needs to be streamed from the server 42 to the client 41.

Referring again to Figure 1, a video encoding unit 499 encodes the live video stream 409 at a number of predefined playback speeds. This may be done using any Adaptive Bit Rate technology such as HLS (Http Live Streaming) and MPEG DASH.

In one embodiment, as depicted in Figure 5, a single stream 20 is stored, and the server 420 (or the client device 41) modifies the individual chunks 20a, 20b etc to allow their display at the required speed. This can be done by omitting individual frames from each chunk to reduce the playing length to that required. The standard MPEG compression system requires some frames ("B" and "P" frames) to be defined with reference to each other and to independently-defined "I"-frames, the frames should be omitted such that a frame is omitted only if all other frames whose definition depends on it are also omitted - in practice this means that B- and P-frames will generally be omitted before I-frames.

To maintain a reasonable download speed, error-checking and other overheads may be reduced during segments with higher speed playbacks, as quality degradation is less noticeable at speed. Data relating to the soundtrack may also be omitted to reduce the required bit rate.

In other embodiments, depicted in Figure 6A and Figure 6B, a number of streams 81, 82, 84, 88: (801, 802, 804, 808,) are stored. Each stream is encoded at a defined bit rate, and each chunk of each stream is stored in a server 420 with an individual address. Part of the resulting store of video data is represented schematically at Figure 6A. Each stream 81, 82, 84, 88 is stored as a series of chunks 810, 811 etc. (In Figures 6A and 6B, the last digit of the reference numeral for each stream has been used to designate the playback speed of the chunks in that stream - e.g the normal (x1) speed stream is 81 in Figure 6a, 801 in Figure 6b:, the respective 4x speed streams are 84, 804 etc. Chunks whose start times coincide in real time have corresponding final digits, e.g 814, 824, 844 in Figure 6A: or, 8014, 8024, 8044 in Fig 6B)).

As shown in Figure 6A, the chunks for different playback speeds may each be of the same duration in playback time (so that a 2x chunk 820 covers the same real-time period as two 1 x chunks 810, 811). Alternatively, as shown in Figure 6B, each may cover the same real-time period (so that a 2x chunk 8020 takes half the time to play back that a 1 x chunk 8010 would require, but both cover the same real-time period).

On request from a user for a catch up stream, one or more MPD files are created by the media server 42, which uses a user profile, and metadata 44 to determine which stream is to be provided at what time, depending on the preferences of the user, i.e. which sections of the video should be presented to the viewer. For example, with reference to Figure 6A, the manifest may specify chunks 820, 812, 813, 824, 826, and 848, (shown shaded) in order, and assemble them into a video stream 80 of "chunks" each of equal playback duration

Similarly, in the arrangement of Figure 6B in which the chunks each represent the same duration in real time but, in consequence, have different playback durations, a set of chunks e.g. 8040, 8021, 8012 etc can be assembled to form a stream 800 in which the playback speed varies.

Use of the MPD file would enable a personalised manifest to be generated, from which a personalised stream can be generated. It would also enable different lengths of content to be created suited to the required catch-up time required. The manifest 46 is generated by the server using inputs from the NIV data file, and delivered to the client 41 to allow the client to request the specified chunks using their respective addresses (step 76) for delivery to the video player 41 and viewing on the output 40. As the chunks 820, 824, 826, 848 have been encoded at the fast forward speeds, no special playback function is required at the user terminal.

The chunks representing accelerated speeds may be generated from the initial content, each being coded separately using standard MPEG coding techniques. Alternatively, they may be derived from the normal-speed content by omitting as many frames as necessary to achieve the speed required. The frames would be deleted according to an order of precedence, in which I-frames would be deleted only if the B-frames and P-frames on which they depend have also been deleted.

In an alternative arrangement, a combined media/content server 42/420 can itself generate a bespoke video file from the manifest 46, by instructing the content server 420 (step 700) to extract the required video chunks 49 and unify the variable speed videos into a 'single' stream for downloading to the user. This stream could be encoded with ABR enabling delivery suited to available bandwidth. Instead of a manifest, with a list of addresses of individual chunks, the user is then given a single address (step 72) from which to retrieve the video file (step 76, 77) generated for him.

In the variant of Figure 7, each chunk 810, 811, 812, etc, is stored in the server as an unencoded stream 88 of I-frames 880, etc. Using the DASH system described above, a client can download specific byte ranges of data from a chunk or from a segment comprising several chunks. The client can calculate the specific byte ranges required to allow it to effectively play back at a selected frame rate. In the example shown, the client selects to download only those byte ranges 890, 894, etc relating to every fourth frame 880, 884, resulting in a 4x speed playback. As illustrated, each frame 880, 881, etc comprises 1 Mbyte, so selecting every fourth frame 880, 884, 888 etc, requires a http request of the form:
GET /some/video/chunk.mpeg HTTP/1.1
Host: hostname.provider.com
Range: bytes=0-999999,4000000-4999999,8000000-8999999 ...

## Claims

1. A method for playing video data retrieved from a database as a plurality of video segments each having metadata associated therewith indicative of the relative narrative interest of individual segments of the data, wherein the video data is capable of being played at a selectable plurality of speeds, and wherein the speed at which each segment is played is selected in accordance with the metadata -associated with that segment.

2. A method according to claim 1, wherein the metadata comprises event markers assigned to one or more of the segments.

3. A method according to claim 2, wherein each event marker has an assigned value and a narrative interest value (NIV) is assigned to each segment, the narrative interest values being weighted according to a value assigned to its associated event marker.

4. A method according to claim 2, or claim 3, wherein each segment is played at a rate which is related to the NIV associated with that chunk.

5. A method according to any preceding claim, wherein smoothing is applied to the metadata values, or to the resulting playback speeds.

6. A method according to any preceding claim, wherein the metadata associated with each playback speed is adjusted such that the overall duration of the content to be played back meets a predetermined condition.

7. A video playback device having a store for storing video content and associated metadata, a playback element for playing the stored video content, a "trick play" system for controlling the playback element to allow the stored video content to be played at a selectable plurality of speeds, and wherein the accelerated play system is controllable in response to the metadata associated with the video content.

8. A video playback device according to claim 7, incorporated in a client device and having a receiving system for receiving video data and associated metadata, and a processor for adapting a playback speed of the video data in accordance with the associated metadata, and a video playback system for playing the video data at the adapted speed.

9. A video playback device according to claim 7, incorporated in a server platform, and having an addressable storage facility for storing a plurality of sets of video data arranged to be played at different respective speeds, a store for address data associated with the video data, a store for metadata associated with the video data, a manifest compiling system for compiling a manifest of addresses of video data selected from the stored sets of video data for playback at different speeds in accordance with the metadata associated with the video data, and for retrieving the data specified in the manifest for assembly into a data stream for playback.

10. A video playback device according to claim 7, claim 8, or claim 9, wherein the metadata comprises a narrative interest value assigned to each segment.

11. A video playback device according to claim 10, wherein smoothing is applied to the narrative interest data.

12. A video playback device according to claim 10 or claim 11, wherein the Narrative interest metadata for each segment is weighted according to the value assigned to an associated event marker.

13. A video playback device according to claim 10, claim 11 or claim 12, wherein the accelerated play system plays each segment at a rate which is related to the NIV associated with that chunk.

14. A video playback device according to claim 10, claim 12 or claim 13, wherein the accelerated play system applies smoothing to the playback speeds derived from the narrative interest data.

15. A video playback device according to claim 10, claim 11, claim 12, claim 13 or claim 14, wherein the accelerated play system comprises a duration control function to select the metadata associated with each playback speed such that the overall duration of the content to be played back meets a predetermined condition.
